# EUROPÄISCHE PATENTSCHRIFT

(11) **EP 2 894 372 B1**
(45) Veröffentlichungstag und Bekanntmachung des Hinweises auf die Patenterteilung: **02.03.2016**
(21) Anmeldenummer: 14003807.6
(22) Anmeldetag: 12.11.2014
(51) Int. Cl.: F16H 7/08

(54) **Spann- und Dämpfungselement für Endloskettentriebe, insbesondere Rollenkettentriebe**
Tensioning and damping element for chain drives, particularly for roller type chain transmission
Élément de tension et d'amortissement pour transmission par chaîne sans fin, notamment transmission par chaîne à rouleaux

(30) Priorität: 14.01.2014 DE 102014000486
(43) Veröffentlichungstag der Anmeldung: 15.07.2015
(73) Patentinhaber: EBERT Kettenspanntechnik GmbH, 04435 Schkeuditz (DE)
(72) Erfinder: Ebert, Siegfried, 04435 Schkeuditz (DE); Meier, Hartmut, 06779 Schierau OT Möst (DE); Ebert, Frank, 04435 Schkeuditz (DE); Tanzmann, Horst, 04157 Leipzig (DE)

(56) Entgegenhaltungen:
- EP-B1- 0 625 653
- DE-A1-102008 011 137
- US-A- 6 126 562

## Beschreibung

Die Erfindung betrifft ein Spann- und Dämpfungselement für Endloskettentriebe, insbesondere Rollenkettentriebe. Es ist anwendbar im Maschinenbau für diametral zu spannende Endloskettentriebe. Der Werkstoff ist ein elastischer Kunststoff.

Bei derartigen Spann- und Dämpfungselementen handelt es sich um zwischen der Form eines konzentrischen Rings und der Form einer Cassinischen Kurve mit ellipsenähnlicher Gestalt elastisch verformbare Elemente mit zur Kette greiffähig außenliegendem Zahnkranz, welche zwischen Last- und Leertrum angeordnet sind. Infolge der ellipsenähnlichen Gestalt der Cassinischen Kurve werden im weiteren Text die für die Ellipse üblichen geometrischen Begriffe verwendet.

Die Spannfunktion resultiert daraus, dass Kettenlängungen ausgeglichen werden, indem das in eine ellipsenähnliche Form vorgespannte Spann- und Dämpfungselement zwischen den Trumen die spannungsfreie konzentrische Form anstrebt.

Aus der gattungsgemäßen EP 0 625 653 B1 ist ein zwischen Last- und Leertrum angeordnetes Spann- und Dämpfungselement bekannt, welches als elastisch verformbares Element einen Zahnkranz mit um die spannungsfreie Ausgangsstellung elastisch verformbaren, seitlich offenen, bogenförmigen und mit dem Ringprofil im Fußkreis ineinander verlaufenden Zähnen aufweist. Ferner ist aus der EP 1 056 964 B1 ein Spann- und Dämpfungselement bekannt, bei dem insbesondere das Ringteil mit zunehmender elastischer Biegung einen querschnittsabhängig abnehmenden Biegewiderstand aufweist.

Die Spann- und Dämpfungselemente sind zur Kette formkorrespondierend greiffähig.

Ihr Zahnkranz besteht aus seitlich offenen, die Form eines Bogens aufweisenden elastischen Zähnen, deren Rollenbetten im Fußkreis mit dem Ringprofil ineinander verlaufen. Zwecks Führungsspiel sind die Rollenbettbreiten kleiner als die innere Weite der zugehörigen Kette. Im Betriebszeitraum liegen verschiedene Faktoren vor, welche die Formkorrespondenz zwischen der Kette zum Spann- und Dämpfungselement betreffen, so dass während der Rotation des Spann- und Dämpfungselements ein periodisch verformtes indifferentes Zahnprofil mit ebensolcher Teilung über den gesamten Außenumfang vorliegt.

Da der Zahnkranz außerhalb der neutralen Biegelinie des Ringteils liegt, ist dessen Teilung bei ellipsenähnlicher Form gestaucht und kleiner als bei konzentrischer Form des Ringteils.

Für die Endlagen der spannungsfreien konzentrischen Form und der vorgespannten ellipsenähnlichen Form des Spann- und Dämpfungselements besteht somit keine Übereinstimmung der Teilung der konzentrischen Form, zugleich dem Fertigteil entsprechend, und der Teilung des Zahnkranzes, bei vorgespannter ellipsenähnlicher Form mit dem Nachteil der Stauchung des Zahnkranzes im Kontaktbereich zur Kette.

Da die Teilung der nicht verschlissenen Kette am Beginn des Betriebszeitraums kleiner ist als die Teilung der verschlissenen Kette am Ende des Betriebszeitraums, bestehen im Betriebszeitraum ständig variierende Teilungsabweichungen.

Für die präzise Funktion des Spann- und Dämpfungselements, insbesondere die Formkorrespondenz des Zahnkranzes zur Kette, sind jedoch die Bereiche des Ketteneingriffs mit den dort außenliegenden Zähnen und Rollenbetten besonders bedeutend.

Je größer die Summe der im Kettenkontakt befindlichen Rollenbetten von Last- und Leertrum ist, desto stabiler ist die Lage und die Planlaufpräzision und Effektivität des Spann- und Dämpfungselements.

Bezüglich des Ketteneinlaufs und Ketteneingriffs sind alle bei ellipsenähnlicher Verformung des Spann- und Dämpfungselements in den betreffenden Bereichen kontaktierten Rollenbetten, da sie außerhalb der neutralen Biegefaser des Ringteils liegen, mit einer Art Schließbewegung der Rollenbetten und somit auch mit einer temporären Verkleinerung der Teilung verbunden.

Im Bereich des Ketteneingriffs um die Nebenscheitelpunkte der ellipsenähnlichen Form kommt es insbesondere bei maximaler Verformung, wie sie am Anfang der Betriebszeit mit neuer und damit nichtgelängter Kette vorliegt, zu einer Stauchung der grundnahen Rollenbettbereiche mit der Folge einer elastischen Auswölbung des Rollenbettgrundes des Ringteils in der Mitte der Rollenbetten. Das führt zu einem Punktkontakt der zylindrischen Rollen der Kette auf der Auswölbung. Ohne dass es zum Kontakt der Kettenrollen mit den gerundeten Freiflächen des Ringprofils kommt, ist ein instabiler, pendelnder Planlauf des Spann- und Dämpfungselementes zwischen den inneren Kettenlaschen, sichtbar als Flattern zwischen dem Last- und Leertrum in der Umlaufebene, die Folge.

Das verringert die Präzision des Ketteneingriffs und damit die Lagesicherung und Funktion des Spann- und Dämpfungselements in der Umlaufebene des Kettentriebs mit der Wirkung von dessen erhöhtem Verschleiß.

Das Zahnprofil des bekannten Spann- und Dämpfungselements weist bogenförmige, offene Zähne auf, die in Verbindung mit einer Schließbewegung des jeweiligen Rollenbetts zum Klemmkontakt mit der Kettenrolle führen, bevor diese den Rollenbettgrund berührt und dabei einen Spalt zum Rollenbettgrund bildet. Durch den Mechanismus dieser Schließbewegung mit der Bildung des Spaltes zum Rollenbettgrund wird nur die unmittelbar im Eingriff befindliche, momentan haupteingreifende Kettenrolle vollständig kontaktiert. Die dem kontaktierten Rollenbett vor- und nachgelagerten, elastisch verformten Rollenbetten stehen in einem verformungsbedingt temporär kleineren Teilungsmaß nicht in präziser Eingreifposition der Kette mit deren regelmäßig konstanter Teilung gegenüber. Es besteht damit eine Verringerung der Umschlingung durch die Kette.

Infolge dieses indifferent eintretenden Klemmkontakts des sich schließenden Rollenbetts zur Kettenrolle kommt es aber bei Einfederung und Ausfederung des Spann-und Dämpfungselements zum unpräzisen Ketteneingriff zwischen der regelmäßig geteilten Kette und den dem kontaktierten Rollenbett vor- und nachgelagerten Rollenbetten unterschiedlicher Deformation und Teilung und damit zu nachteilig erhöhtem Laufgeräusch des Kettengetriebs. Ein weiterer vom anfänglichem Betriebszustand in den Endbetriebszustand driftend veränderter Faktor der Formkorrespondenz zwischen der Kette und dem Zahnprofil des Spann-und Dämpfungselements besteht darin, dass mit der Längung der Kette aus der Einlaufzeit und dem Verschleißzeitraum und bei Betriebstemperatur des Kettentriebs eine driftende Vergrößerung der Kettenteilung einhergeht.

Je größer die Verformung beim Einbau in den Kettentrieb ist, desto stärker sind die Rollenbetten, da diese außerhalb der neutralen Biegefaser des Ringteils liegen, im Eingriffssegment zur Kette ebenfalls temporär nachteilig verkleinert. Bei dieser Verkleinerung nehmen sie das Profil einer stehenden Halb-Ellipsenkurve, deren Hauptscheitelachse orthogonal zum Teilkreis liegt, ein. Zugleich bestehen in dem radial außerhalb der neutralen Biegefaser liegenden Zahnkranz des vorgespannten Spann- und Dämpfungselements Bereiche mit gestauchter Teilung im Kontaktbereich zur Kette.

Bezüglich der Formkorrespondenz des Zahnkranzes zur Kette bestehen somit Präzisionsabweichungen bei ellipsenähnlich vorgespanntem, teilweise vorgespanntem und ungespannt konzentrischem Spann-und Dämpfungselement sowie bei nichtgelängter, teilgelängter und grenzgelängter Kette. An- und abschwellende Momente sowie Wechsel von Last- und Leertrum während des Reversierens bewirken wechselnde Umschlingungswinkel sowie übergangsweise Verformungen des Zahnkranzes und des Ketteneingriffs und damit weitere Präzisionsmängel.

Zusammengefasst bestehen während des Betriebszeitraums des Kettentriebes aus einer Vielzahl von Einflussfaktoren resultierende in-stationäre Eingriffsverhältnisse zwischen Zahnkranz und Kette hinsichtlich eines unpräzisen Ketteneingriffs.

Durch den nach dem üblichen Konstruktionsprinzip für Kettenräder stationär betrachteten und konzentrisch gestalteten Zahnkranz weist dieser unter Betriebsbedingungen mit der ellipsenähnlichen Verformung des Spann- und Dämpfungselements ungleiche Rollenbetten auf.

Sind diese, so wie im Stand der Technik dargelegt, für den wirkenden Kettenkontakt passend, so sind sie für den beginnenden Kontakt gestaucht und verkleinert sowie für den sich lösenden Kontakt gedehnt und vergrößert. Diese jedoch als Fehler erst unter Betriebsbedingungen auftretenden Abweichungen wachsen mit zunehmender Kettengeschwindigkeit und zunehmender Einfederung.

Insgesamt weisen die bekannten Spann- und Dämpfungselemente im Zusammenhang mit dem

Verschleißverlauf der Kette, den Lastwechselphasen sowie dem Reversieren nach dem Grad der Verformung die Nachteile von phasenweiser Laufunruhe, erhöhtem Laufgeräusch, verursacht durch Eingriffsstöße, und von verschleißintensiven Bereichen an den Zahnflanken, auf.

Die technische Ursache dieses Nachteils der bekannten Spann- und Dämpfungselemente besteht
während ihres ellipsenähnlich vorgespannten Zustands im instabilen Punktkontakt der Kettenrollen zu den verformungsbedingten Auswölbungen des Ringteilprofils in Fußkreisnähe der Rollenbetten, in den Differenzen von Teilung und von Formkorrespondenz zur Kette im beginnenden Kontakt, im wirkenden Kontakt und im sich lösenden Kontakt des maßbestimmenden Kettenkontaktes des eingreifenden Rollenbettes zu den vor- und nachgelagerten Kettenrollen, im Unterschied der regelmäßigen Teilung des Zahnkranzes im gefertigten konzentrischen Zustand und seiner verformungsbedingt verringerten Teilung, in der Rollenbettschließung im ellipsenähnlich vorgespannten Zustand sowie in der indifferenten Varianz der Teilung des Zahnkranzes bei den unterschiedlichen Verformungen im Betriebszeitraum zur verschleißabhängig driftenden Vergrößerung der Teilung der Kette bis zum Verschleiß. Bei den Spann- und Dämpfungselementen der beschriebenen Art variiert die Teilung des Zahnkranzes funktionsbedingt nach dem Grad der elastischen Verformung zur ellipsenähnlichen Form.

Zur Konstruktion von konzentrischen Kettenrädern sind darüber hinaus die DE 102 37 277 A1 sowie die DE 200 06 278 U1 bekannt, bei denen der Teilungsabstand des Antriebsrads, bzw. des Kettenrads, zwecks Ausgleich von last-und erwärmungsabhängigen Dehnungen sowie vom Verschleiß des Fördermittels, bzw. der Kette, größer ist, als der Teilungsabstand des Gegeneingriffselements des Fördermittels, bzw. der Kette.

Diese konstante Vergrößerung der Teilung auf dem konzentrischen Teilkreis ist auf feste Kettenräder und den Verschleißverlauf bis zur Verschleißgrenze des Zugmittels bezogen.

Die elastische Stauchung und Dehnung des Ringteils, die Rollenbettverformung, die Verformung des elastischen Zahnkranzes und das damit verbundene Entfallen des Teilkreises bei elastisch verformtem Spann-und Dämpfungselement wird in unvollständiger Weise nicht berücksichtigt.

Die technische Ursache dafür ist das Nichterkennen einer Cassinischen , ellipsenähnlichen Kurve der Teilung als temporäre Restriktion, welche zusätzlich als Funktionsbedingung bei elastisch verformtem Spann-und Dämpfungselement vorliegt.

Ziel der Erfindung ist ein Spann- und Dämpfungselement für Endloskettentriebe, insbesondere Rollenkettentriebe, mit verbessertem Lauf, kleinerem Laufgeräusch und weniger Verschleiß, welches für höhere Spannwege und Kettengeschwindigkeiten verwendbar ist.

Der Erfindung liegt daher die Aufgabe zugrunde, das Spann-und Dämpfungselement gemäß dem Oberbegriff des Anspruchs 1 dahingehend weiterzuentwickeln, dass es während seines Verformungsverlaufs zwischen dem spannungsfreien konzentrischen Zustand und dem ellipsenähnlich vorgespannten Einbauzustand einen Zahnkranz mit planlaufstabileren Rollenbetten, einen verringertem Wärmeübergang von der Kette zum Ringteil, eine zur verschleißenden Kette passende und zwischen seiner konzentrischen und ellipsenähnlicher Form zur Kettenteilung passende Zahnprofilteilung, sowie eingriffsstabilere Rollenbetten im Umschlingungsbogen zur Kette aufweist.

Erfindungsgemäß wird die Aufgabe durch die Merkmale des Patentanspruchs 1 gelöst. Weitere Ausgestaltungen der Erfindung sind Gegenstand der Unteransprüche.

Der Erfindung liegt die Erkenntnis zu Grunde, dass die Umschlingungsbögen um das Spann-und Dämpfungselement beim Eingriff in das Lasttrum und in das Leertrum jeweils regelmäßig auf weniger als 5 Kettenglieder begrenzt sind, wobei in den Nebenscheitelpunkten der ellipsenähnlichen Form der maßbestimmende Kettenkontakt besteht. Dem maßbestimmenden Kettenkontakt sind regelmäßig 2 Kettenglieder beginnend eingreifend in die Rollenbetten des Spann- und Dämpfungselements und regelmäßig 2 Kettenglieder sich lösend zu den Rollenbetten vor- bzw. nachgelagert.

Dieser segmentweise Eingriff des Zahnprofils des Spann- und Dämpfungselements bedeutet radial gekrümmte Segmente entsprechend des Fertigungszustandes und entsprechend der Phase des Betriebszeitendes mit verschlissener Kette im Unterschied zu ellipsenähnlich gekrümmten Segmenten entsprechend der Verformung zu Betriebszeitbeginn mit neuer Kette.

Dem Lösungsgedanken liegt zugrunde, den Widerspruch zwischen der fertigungsbedingt konzentrischen Form des Spann- und Dämpfungselements und seinen funktionsbedingten Verformungsvarianten während des Betriebszeitraums so zu gestalten, dass die Korrespondenz der Teilung und der Rollenbetten seines Zahnkranzes zum maßbestimmenden Kettenkontakt der eingreifenden Kettenrolle und den beginnend kontaktierenden und sich lösend kontaktierenden Kettenrollen durch eine zu den Extremwerten für die minimale und maximale Verformung verbessert passende Kontakttoleranz zu lösen.

Die Rollenbetten weisen erfindungsgemäß in der Breite gegenüberliegende, zum Ringteil seitlich freistehend, in die innere Weite der Kette greiffähig angeordnete Wülste auf. Zwischen diesen Wülsten besteht eine Rollenbettvertiefung mit der Funktion als Freifläche zur Kettenrolle. Die Wülste sind hervorstehend stabilisierende Bestimmflächen für die Lage und Wälzbewegung der einlaufenden Rollen.

Das Spann- und Dämpfungselement rotiert in der Umlaufebene des Kettentriebes, so dass es infolge der stabilen Bestimmflächen nicht zu Planlaufschwankungen und Flattern zwischen dem Last- und Leertrum kommt.

Die Wülste verlaufen vom Fußkreis bis in die Zahnflanken. Damit wird das planstabile Wälzen der maßbestimmend kontaktierten und deren in der Kette vor-und nachangeordneten Kettenrollen im Rollenbett beidseitig der Innenlaschen der Kette bis zu einer Umschlingung von mindestens 5 Kettengliedern ermöglicht.

Die Wülste sind planseitig der Rollenbetten angeordnet und bilden nach außen offene Kehlen zum Ringteil. Damit wird der unerwünschte Wärmeübergang aus dem Kettenkontakt in das Ringteil gehemmt.

Bei ellipsenähnlicher Verformung des Spann- und Dämpfungselements im Ketteneingriffsbereich kommt es zur Druckverformung des Rollenbetts. Dabei wird das Rollenbett im Fußkreis derartig gestaucht, dass sich eine Auswölbung bildet und die Rollenbettvertiefung verkleinert wird.

Unter der Bedingung, dass die Auswölbung nicht größer ist als die Wülste, bestehen auf den Wülsten des Rollenbetts beidseitig stabile Rollenauflagen. Dadurch, dass die Wülste bis in die Zahnflanken verlaufen, ist der Ketteneingriff vom beginnenden bis zum sich lösenden Kontakt mit stabiler Auflage im Rollenbett für alle Verformungszustände zwischen den Endlagen gesichert.

Der nachteiligen Druckverformung und damit Stauchung des Zahnkranzes im Kontaktbereich zur Kette wird vorgebeugt, indem dessen Teilung q₀ in der Konstruktion soweit vergrößert ist, dass diese in jeder Phase der elastischen Verformung größer ist, als die Teilung p₀ der nicht gelängten Kette.

Demzufolge wurde für die Teilung q₀ unter Berücksichtigung des Betriebszeitraums der neuen, der betriebserwärmten, driftend verschleißenden und verschlissenen Kette ein Extensionsfaktor von 1,02·p₀ < q₀ < 1,08·p₀ als grundsätzlich geeignet ermittelt.

Der Wert q₀ ist damit der Wert für die Teilung das Spann- und Dämpfungselements als konzentrisches Fertigteil. Vorteilhafterweise wurde dieser Faktor mit q₀= 1,05·p₀ ermittelt.

Mit dieser Extension der Teilung besteht eine verbesserte Korrespondenz der Teilung der Rollenbetten des Zahnkranzes zwischen dem maßbestimmenden Kettenkontakt der eingreifenden Kettenrolle und den beginnend kontaktierenden und sich lösend kontaktierenden Kettenrollen über den gesamten Betriebszeitraum.

In Abweichung von der üblichen Entwicklung des Zahnprofils für Kettenräder mit radialen Rollenbetten wird erfindungsgemäß ein Zahnprofil mit radial extendierten Rollenbetten, vorzugsweise mit halb-ellipsenähnlicher Profilform, vorgeschlagen. Die Rollenbetten liegen mit den Vertiefungen der Rollenbettmulden auf dem Fußkreis des Spann- und Dämpfungselements und verlaufen bis in die Zahnköpfe.

Für die Länge l₀ der Hauptscheitelachse der Profilform zwischen den Punkten W₁,W₂ wurde, bezogen auf das Spann- und Dämpfungselement als konzentrisches Fertigteil und den Rollendurchmesser d₁, ein Extensionsfaktor von 1,1·d₁ < l₀ < 1,45·d₁ als grundsätzlich, vorteilhafterweise l₀= 1,25-dl, als geeignet ermittelt.

Im Eingriffsbereich der Kette und bei vorgespantem Spann- und Dämpfungselement entstehen Druckverformungen des Zahnprofils. Bei dieser Druckverformung der außerhalb der neutralen Biegefaser liegenden Rollenbetten wird das Maß lₒ auf das Maß l₁ elastisch eingestellt, wobei entsprechend der o.a. Faktoren die nachteilige, an der Kettenrolle anliegende und auf dem Fußkreis "stehende" ellipsenähnliche Rollenbettform verhindert wird.

Durch die erfindungsgemäß extendierten Rollenbetten mit der Profilform ähnlich einer auf dem Fußkreis liegenden Halbellipsenkurve besteht eine größere Formtoleranz und eine verbesserte Formkorrespondenz des Zahnkranzes zwischen der maßbestimmend eingreifenden Kettenrolle und den beginnend kontaktierenden und sich lösend kontaktierenden Kettenrollen über den gesamten Betriebszeitraum. Durch die Form der Halbellipsenkurve wird zugleich ein symmetrisches, von der Laufrichtung der Kette unabhängiges Zahnprofil geschaffen.

Die Kette kontaktiert damit unabhängig von der Verformung des Spann- und Dämpfungselements und ihres Verschleißzustands mit ihren Rollen die Rollenbetten stets mit Zahnlückenspiel.

In Kombination der einzelnen vorgeschlagenen Merkmale ist das Spann- und Dämpfungselement damit selbsteinstellend zwischen der fertigungsbedingt konzentrischen Form und seinen funktionsbedingten Verformungsvarianten über den eigenen Betriebszeitraum und über den Betriebszeitraum der Kette bis zum grenzverschlissenem Zustand.

Die damit hauptsächlich erzielten Vorteile bestehen in besserer Laufpräzision des gesamten Kettentriebs, kleinerem Laufgeräusch, langsameren Verschleiß des Zahnprofils und größerer Belastbarkeit hinsichtlich der vom konzentrischen Zustand ausgehenden Verformung und des sich daraus ergebenden Federwegs.

Die Erfindung soll nachstehend an einem Beispiel näher erläutert werden.
Figur 1 zeigt die Abbildung eines Spann- und Dämpfungselements als Fertigerzeugnis.
Figur 2 zeigt das Eingriffsbild des Spann- und Dämpfungselements für die jeweiligen Endlagen der spannungsfreien konzentrischen Form und der vorgespannten ellipsenähnlichen Form.
Figur 3 zeigt einen Ausschnitt aus dem Eingriffsbild des Spann- und Dämpfungselements für die Endlage der ellipsenähnlichen Form mit nicht verschlissener Kette.
Figur 4 zeigt einen Ausschnitt aus dem Eingriffsbild des Spann- und Dämpfungselements für die Endlage der konzentrischen Form bei Verschleißlängung der Kette
Figur 5 zeigt eine Schnittdarstellung durch ein Rollenbett im spannungsfreien Zustand.
Figur 6 zeigt eine Schnittdarstellung durch ein Rollenbett bei ellipsenähnlicher Verformung.
Figur 7 zeigt die Projektion der Kontaktzonen der Rollenbetten des konzentrischen Spann- und Dämpfungselements zu den Kettenrollen.

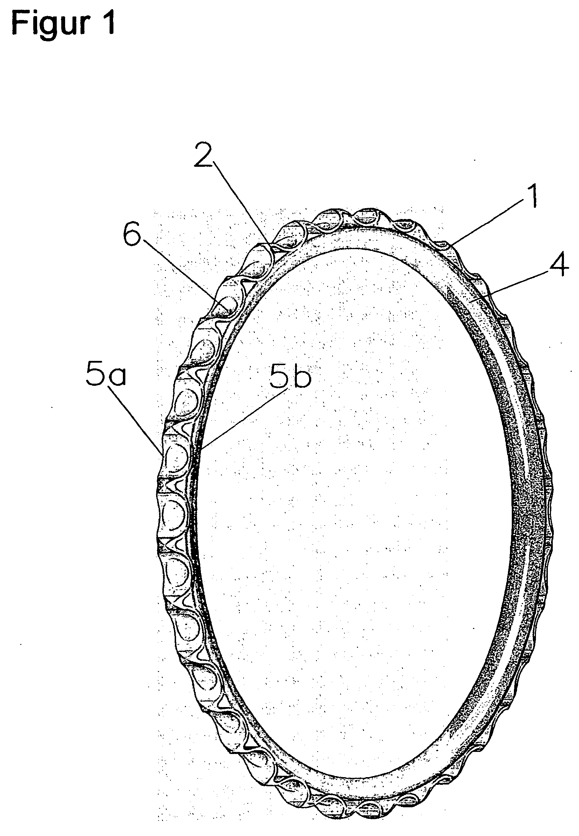

Das in Figur 1 dargestellte Spann- und Dämpfungselement ist konzentrisch. Es entspricht in dieser nicht vorgespannten Gestalt der Gestalt des Fertigerzeugnisses.

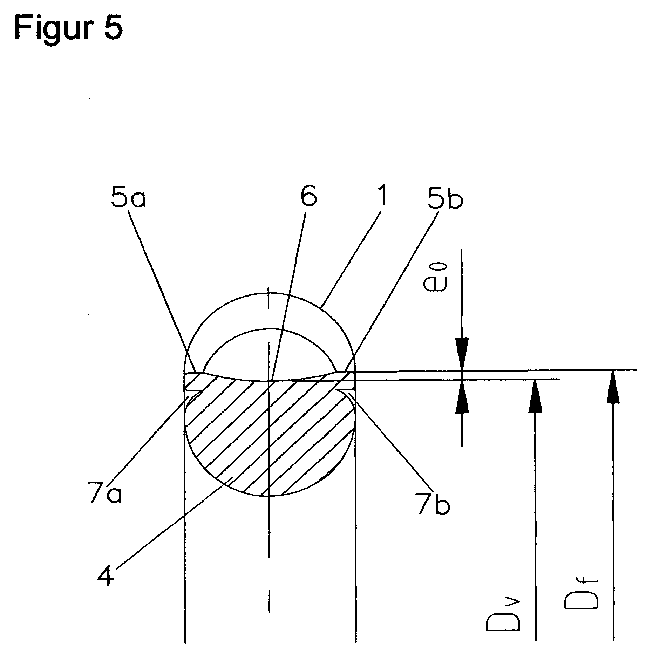

Wie aus den Figuren 1 und 2 sowie den Figuren 5 und 7 ersichtlich, weist das Spann- und Dämpfungselement einen fußkreisinnenseitigen, unter den Zähnen 1 des Zahnkranzes teilweise freiliegenden, sich über seine Mantelfläche 2 mit den Rollenbetten 3 des Zahnkranzes im Fußkreis D_{f} ineinander verlaufendes Ringteil 4 auf.

Die Rollenbetten des Zahnprofils weisen durch im Profil gegenüberliegend angeordnete bis in die Zahnflanken und in den Fußkreis D_{f} verlaufende Wülste 5a, 5b auf. Mittig zwischen den Wülsten und im Ringteil verlaufend liegen bis an den Vertiefungskreis Dᵥ grenzende Rollenbettvertiefungen 6 mit der Tiefe e₀ = 0,5(D_{f}- Dᵥ).

Die Wülste sind plan- und außenseitig freistehend und bilden Kehlen 7a, 7b zum Ringteil.

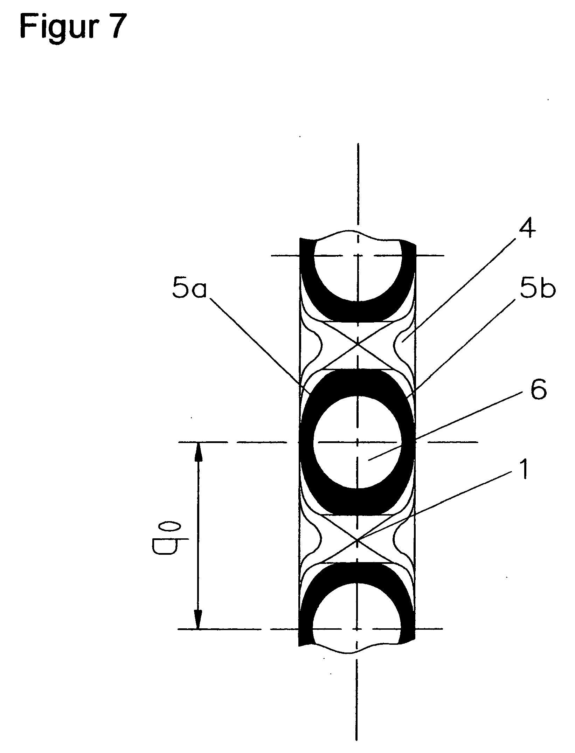

Die Kontaktbereiche der Rollenbetten zu den Rollen der Kette liegen, wie in Figur 7 dargestellt, auf den Wülsten. Die Rollenbettvertiefungen liegen frei zu den Rollenbetten.

Der unerwünschte Wärmeübergang von den Wülsten in das Ringteil wird durch die Kehlen unterbrochen.

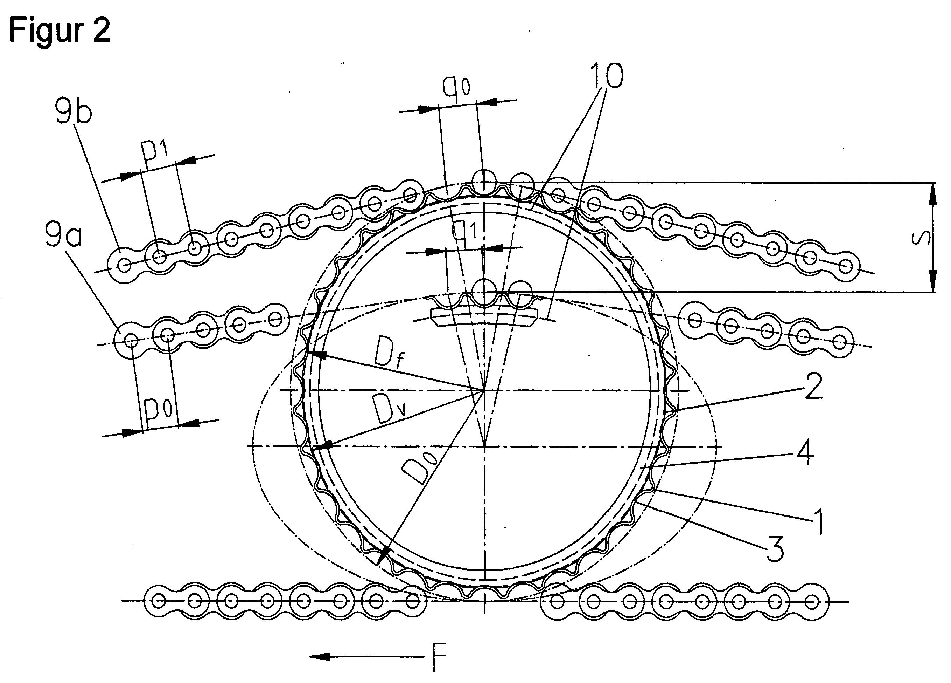

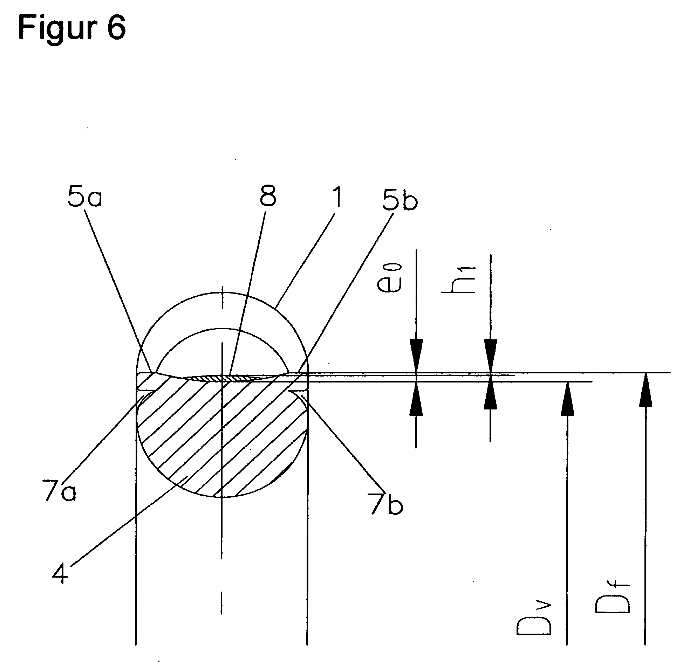

Kommt es, wie in Figur 2 gezeigt, bei ellipsenähnlicher Verformung des Spann- und Dämpfungselements zur Druckverformung des Rollenbetts, so wird das Rollenbett, wie in Figur 6 gezeigt, im Bereich des Fußkreises derartig gestaucht, dass sich eine Auswölbung 8 mit der Höhe h₁ bildet und die Rollenbettvertiefung verkleinert. Unter der Bedingung, dass die Höhe der Auswölbung h₁ < e₀ ist, bestehen auf den Wülsten des Rollenbetts beidseitig stabile Rollenauflagen. Dadurch, dass die Wülste bis in die Zahnflanken verlaufen, ist der Ketteneingriff vom beginnenden bis zum sich lösenden Kontakt mit stabiler Auflage im Rollenbett für alle Verformungszustände zwischen den Endlagen gesichert.

Wie ferner aus Figur 2 ersichtlich, besteht für die Endlagen der spannungsfreien konzentrischen Form und der vorgespannten ellipsenähnlichen Form keine Übereinstimmung der Teilung q₀ der konzentrischen Form, zugleich dem Fertigteil entsprechend, und der Teilung q₁ des Zahnkranzes entsprechend der vorgespannten ellipsenähnlichen Form. Dabei ist q₀ > q₁. Ebenso besteht zwischen den Teilungen p₀ und p₁ der Kette keine Übereinstimmung.

Die maß- und fertigungsbestimmende Teilung des Spann- und Dämpfungselements ist die Teilung p₀ der nicht verschlissenen Kette 9a am Beginn des Betriebszeitraums. Dem gegenüber ist die Teilung p₁ der verschlissenen Kette 9b mit p₁ > p₀.

Für einen präzisen Eingriff der Kette ist die Teilung q₁ des Spann- und Dämpfungselements unter Berücksichtigung der Schließbewegung des Zahnkranzes und der Bedingung, dass es nicht zum Verklemmen der Kettenrollen kommen soll, mit q₁ > p₀ vorgegeben. Im Verschleißverlauf der Kette vergrößert sich sowohl die ursprüngliche Teilung der Kette bis zum Erreichen der Verschleißlängung auf das Maß p₁ und der Verformungsgrad des Spann- und Dämpfungselements bis zum Erreichen der konzentrischen Form mit der Teilung q₀.

Die beispielsweise gezeigte Kette hat am Ende des Betriebszeitraums eine Verschleißlängung von 3%, so dass sich eine Teilung von p₁=1,03·p₀ ergibt. Bei dieser Längung der verschlissenen Kette 9b ist das Spann- und Dämpfungselement am Ende seines Spannweges konzentrisch und nicht mehr vorgespannt.

Dadurch, dass der Zahnkranz außerhalb der neutralen Biegelinie 10 des Ringteils liegt, ist, bezogen auf den Eingriffsbereich des Spann- und Dämpfungselements zur Kette, die Teilung der konzentrischen Form q₀ größer als die Teilung der ellipsenähnlichen Form q₁.

Der nachteiligen Stauchung des Zahnkranzes im Kontaktbereich zur Kette wird somit vorgebeugt, indem dessen Teilung q₀ soweit vergrößert wird, dass es in jeder Phase der Verformung größer als der Betrag der Kettenteilung der Kette mit der Teilung p₁ ist.

Für diese extendierte Teilung q₀ wurde q₀ = 1,05p₀ als besonders geeignet ermittelt.

Mit dieser Extension der Teilung besteht eine verbesserte Korrespondenz der Teilung der Rollenbetten des Zahnkranzes zwischen dem maßbestimmenden Kettenkontakt der eingreifenden Kettenrolle und den beginnend kontaktierenden und sich lösend kontaktierenden Kettenrollen über den gesamten Betriebszeitraum.

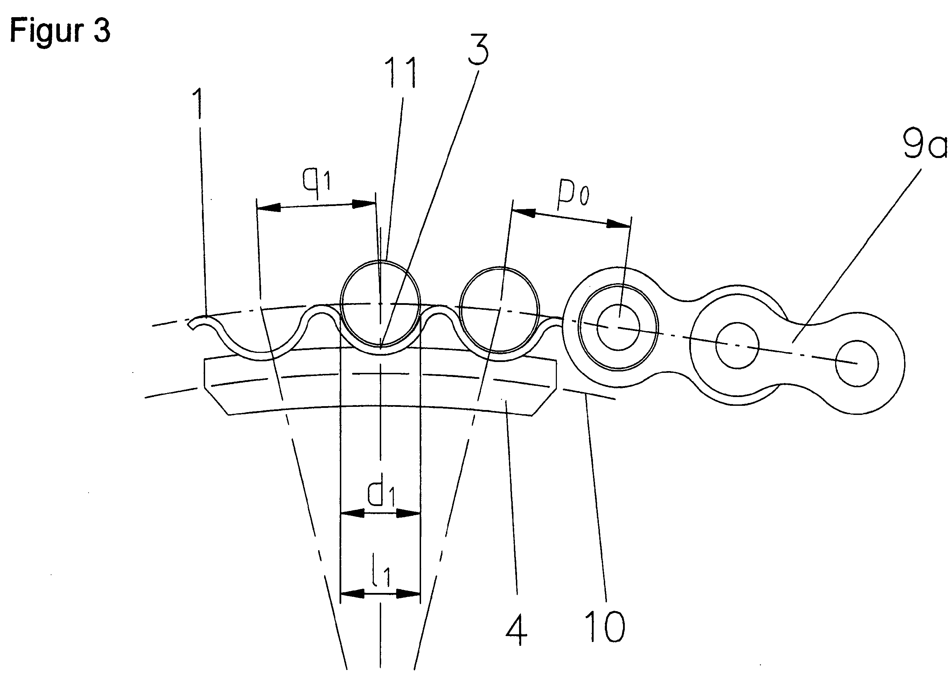

Wie aus Figur 3 ersichtlich, erfolgt zu Beginn des Betriebszeitraums mit nicht verschlissener Kette der Eingriff des Zahnkranzes des Spann- und Dämpfungselements in der Endlage der ellipsenähnlichen Form in die Kette in der für den Nebenscheitelbereich charakteristischen kleineren Krümmung. Dabei ist das Zahnprofil gestaucht und bildet zur eingreifenden Rolle 11 ein anliegendes Rollenbett 3. Der Abstand zum jeweils vor- und nachgelagertem Rollenbett ist q₁. Für die beispielsweise Erläuterung wurde p₀ = q₁ gewählt. Die Rollen der dem maßbestimmendem Eingriff vor- und nachgelagerten Kettenglieder der neuen Kette greifen somit in Teilungsübereinstimmung ein.

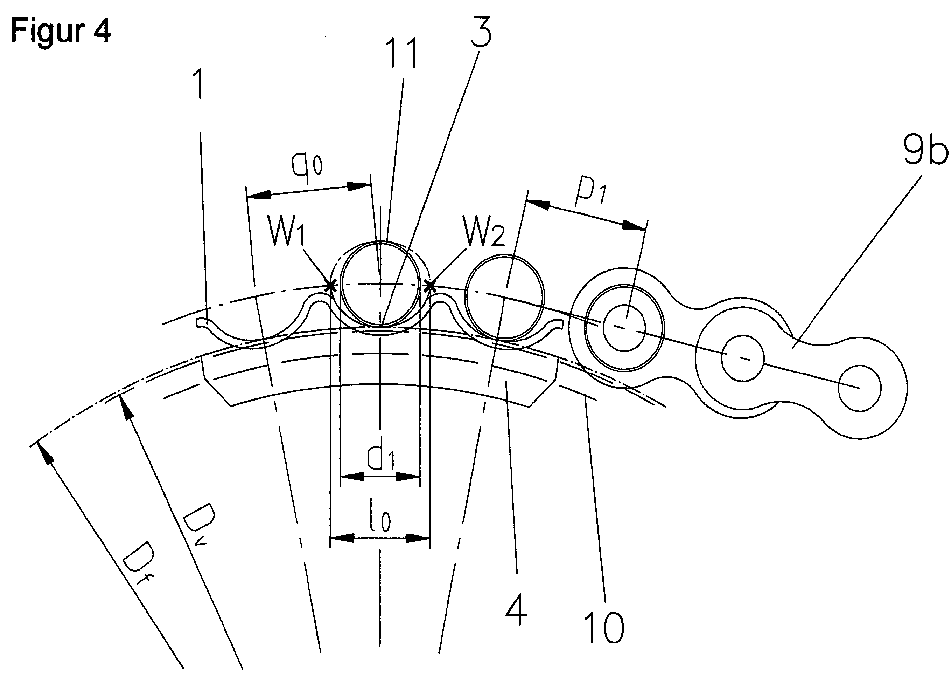

Wie aus Figur 4 ersichtlich, erfolgt bei Verschleißlängung der Kette und Ende des Spannwegs s der Eingriff des Zahnkranzes des Spann- und Dämpfungselements in der Endlage der konzentrischen Form in der für das Kreissegment charakteristischen radialen Krümmung. Die radiale Krümmung entspricht zugleich der Krümmung des Fertigteils. Der Zahnkranz weist fertigungsgemäß eine Teilung q₀ und entsprechend der Zähnezahl einen extendierten Teilkreis auf.

In Abweichung vom üblichen Zahnprofil für Kettenräder mit radialen Rollenbetten hat das Zahnprofil radial extendierte Rollenbetten 3. Die auf dem Fußkreis liegenden Rollenbetten haben eine Profilform ähnlich einer Halbellipsenkurve. Die auf den Teilkreis D₀ projizierte Hauptscheitelachse zwischen den Punkten W₁,W₂ hat die Länge l₀. Die Tiefe der Rollenbetten ergibt sich aus dem Ellipsenverhältnis. Die Zahnhöhen liegen innerhalb des Kopfkreises. Die Rollenbetten liegen mit den Vertiefungen der Rollenbettmulden tangierend auf dem Fußkreis des Spann- und Dämpfungselements und verlaufen bis in die Zahnflanken.

Für die Länge l₀ der Hauptscheitelachse der Profilform zwischen den Punkten W₁,W₂ wurde, bezogen auf den Rollendurchmesser d₁ der Kette, ein beispielsweiser Faktor von l₀= 1,25-d₁ eingesetzt.

Das Spann- und Dämpfungselement mit den extendierten Rollenbetten kontaktiert damit unabhängig von seiner Verformung und vom Verschleißzustand der Kette die Rollen der Kette stets greiffähig zwischen der maßbestimmend eingreifenden Kettenrolle und den beginnend kontaktierenden und sich lösend kontaktierenden Kettenrollen mit erhöhter Teilungs- und Formtoleranz über den gesamten Betriebszeitraum mit der Folge von verbessertem Lauf, kleinerem Laufgeräusch und weniger Verschleiß. Darüber hinaus ist es für ein Einsatzgebiet mit größeren Spannwegen und größeren Kettengeschwindigkeiten verwendbar.

## Patentansprüche

1. Spann- und Dämpfungselement für Endloskettentriebe, insbesondere Rollenkettentriebe, welches als ein elastisch verformbares Element ein Ringteil (4) und einen an dessen Außenumfang angeordneten, zur Kette greiffähig korrespondierenden Zahnkranz mit elastisch verfombaren, seitlich offenen Zähnen (1) und im Fußkreis mit dem Ringteil verlaufende Rollenbetten (3) aufweist, zwischen einem Lasttrum und einem Leertrum angeordnet ist und dabei ständig auf beide Trume wirkt, und zwischen der Form eines konzentrischen Elements und der Form einer Cassinischen Kurve mit ellipsenähnlicher Gestalt verformbar ist, wobei der Teilkreisdurchmesser oder die kleinste Achse des elastischen Elements größer ist als der Teilkreisdurchmesser des kleinsten Kettenrads des Kettentriebs,
**dadurch gekennzeichnet, dass** der Zahnkranz zwischen den Zähnen (1) radial elastische Rollenbetten (3) mit in der Breite der Rollenbetten axial gegenüberliegenden, beidseitig zum Ringteil (4) planen und außenliegend auf dem Fußkreis (D_{f}) liegenden Wülsten (5a, 5b) mit einer mittig zwischen den Wülsten (5a, 5b) im Ringteil zwischen dem Fußkreis (D_{f}) und dem Vertiefungskreis (Dᵥ) verlaufender Rollenbettvertiefung (6) der Tiefe e₀ = 0,5(D_{f}- Dᵥ), deren Betrag (e₀) in spannungsfreier Ausgangsstellung größer ist als der Betrag einer Höhe (h₁) einer Auswölbung (8) im ellipsenähnlich vorgespannten Zustand, aufweist,
dass der Zahnkranz zwischen dem Ringteil (4) und den Wülsten (5a, 5b) angeordnete Kehlen (7a, 7b), aufweist, und
dass der Zahnkranz eine extendierte Teilung (q₀) mit 1,02-p₀ < q₀ < 1,08.p₀, wobei (p₀) die Teilung der nichtverschlissenen Rollenkette ist,
sowie extendierte Rollenbetten mit einer Profilform ähnlich einer radial auf dem Fußkreis liegenden Halbellipsenkurve aufweist, deren auf den Teilkreis projizierte Hauptscheitelachse (W₁,W₂) die Länge (l₀) mit 1,1.d₁ < l₀ < 1,45-d₁, aufweist, wobei (d₁) der Rollendurchmesser der Kette ist.

2. Spann- und Dämpfungselement nach Anspruch 1, wobei die extendierte Teilung q₀= 1,05·p₀
beträgt.

3. Spann-und Dämpfungselement nach Anspruch 1, wobei die Länge l₀= 1,25·d₁ beträgt.

## Claims

1. Tensioning and damping element for endless chain drives, especially roller chain drives, which, as an elastically deformable element, comprises a ring part (4) and a corresponding toothed rim arranged at its outer circumference and capable of engaging with the chain and with elastically deformable laterally open teeth (1), and, in the root circle, with roller seats (3) pass into with the ring part, and which is arranged between a driving side and a slack side, thereby taking effect on both sides, and is capable of deformation between the form of a concentric element and the form of a Cassini curve with a shape close to an ellipse, wherein the pitch circle diameter or the smallest axis of the elastic element is greater than the pitch circle diameter of the smallest chain wheel of the chain drive,
**characterized in that** the toothed rim comprises, between the teeth (1), radially elastic roller seats (3), with protuberances (5a, 5b) located axially opposed in the width of the roller seats, facing the ring part (4) on both sides and located on the outside on the root circle (D_{f}), with a roller seat indentation (6), of depth e₀ = 0,5(D_{f}- Dᵥ), running centrally between the protuberances (5a, 5b) in the ring part between the root circle (D_{f}) and the indentation circle (Dᵥ), the value (e₀) of which, in the tension-free initial position, is greater than the value of a height (h₁) of an outer camber (8) in the pretensioned state, close to an ellipse, that the toothed rim comprises grooves (7a, 7b) arranged between the ring part (4) and the protuberances (5a, 5b), and
that the toothed rim comprises an extended pitch (q₀) with 1,02·p₀ < q₀ < 1,08·p₀, wherein (p₀) is the pitch of the unworn roller chain,
as well as extended roller seats with a profile form similar to a half-ellipse curve located radially on the pitch circle, of which the main vertex axis (W₁, W₂) projected onto the pitch circle exhibits the length (l₀) with 1,1·d₁ < l₀ < 1,45·d₁, wherein (d₁) is the roller diameter of the chain.

2. Tensioning and damping element according to claim 1, wherein the extended pitch q₀= 1,05·p₀.

3. Tensioning and damping element according to claim 1, wherein the length l₀= 1,25·d₁.

## Revendications

1. Elément de tension et d'amortissement pour les transmissions par chaîne à rouleau, particulièrement pour les transmissions par chaîne à rouleaux qui présente comme élément élastique déformable, une partie annulaire (4) et une couronne dentée à sa circonférence extérieure correspondante pour saisir la chaîne avec des dents (1) ouvertes latéralement élastiques déformables et dans le cercle de pied des lits à rouleaux (3) passant dans la partie annulaire, qui est placé entre un brin sous charge et un brin à vide et qui agit ainsi constamment sur les brins et qui est déformable entre la forme d'un élément concentrique et la forme d'un ovale de Cassini à forme semblable à une ellipse, le diamètre primitif de référence ou le plus petit axe de l'élément élastique étant supérieur au diamètre primitif de référence de la plus petite roue à chaîne de transmission par chaîne,
**caractérisé en ce que** la couronne dentée présente, entre les dents (1), des lits de rouleaux (3) à élasticité radiale avec dans la largeur des lits de rouleaux, opposés axialement, des deux côtés plans par rapport à la partie annulaire (4) et à l'extérieur avec des rebords (5a, 5b) sur le cercle de pied (D_{f}) avec une concavité de lit à rouleaux (6) de la profondeur e₀ = 0,5(D_{f}- Dᵥ) passant au centre entre les rebords (5, 5b) dans la partie annulaire entre le cercle de pied (D_{f}) et le cercle de concavité (Dᵥ) dont le montant (e₀), en position initiale non tendue, est supérieur au montant d'une hauteur (h₁) d'une convexité (8) à l'état prétendu semblable à une ellipse,
que la couronne dentée présente des rainures (7a, 7b) entre la partie annulaire (4) et les rebords (5a, 5b)
que la couronne dentée présente un pas étendu avec 1,02·p₀ < q₀ < 1,08·p₀, (p₀) étant le pas de la chaîne à rouleaux non usé,
ainsi que des lits à rouleaux étendus avec une forme de profil semblable à une courbe semi-elliptique posant radialement sur un cercle de pied dont l'axe de sommet principal (W₁,W₂) projeté sur le cercle primitif de référence la longueur (l₀) avec 1,1·d₁ < l₀ < 1,45·d₁, (d₁) étant le diamètre de rouleau de la chaîne.

2. Elément de tension et d'amortissement selon la revendication 1, le pas étendue étant de q₀= 1,05·p₀.

3. Elément de tension et d'amortissement selon la revendication 1, la longueur étant de l₀ = 1,25·d₁.
